# EUROPEAN PATENT APPLICATION

(11) **EP 4 230 061 A1**
(43) Date of publication of application: **23.08.2023**
(21) Application number: 22891176.4
(22) Date of filing: 17.11.2022
(51) Int. Cl.: A24D 1/02

(54) **PAPER TUBE COMPRISING SCENTED SHEET, AND SMOKING ARTICLE COMPRISING SAME**

(30) Priority: 19.11.2021 KR 20210159998
(71) Applicant: KT & G Corporation, Daejeon 34337 (KR)
(72) Inventor: AHN, Ki-Jin, Daejeon 34128 (KR); KIM, Dong Hyun, Daejeon 34128 (KR); KIM, Ick Joong, Daejeon 34128 (KR); JUNG, Kyung Bin, Daejeon 34128 (KR); JEOUNG, Eun Mi, Daejeon 34128 (KR)
(74) Representative: Ter Meer Steinmeister & Partner
(86) International application number: PCT/KR2022/018146
(87) International publication number: WO 2023/090875

(57) **Abstract**

The present disclosure relates to a paper tube including a flavored sheet and a smoking article including the same, and more particularly, relates to a paper tube for smoking articles which includes a flavored sheet, which includes a cellulose-based polymer, a plasticizer, and a flavoring material, and which is on an inner surface, an outer surface, or both of the paper tube, and to a smoking article including the same.

## Description

### Technical Field

The present disclosure relates to a paper tube including a flavored sheet, and a smoking article including the same.

### Background Art

In the case of a heating-type stick product among smoking articles, heating using a dedicated device is essential for an expression of a smoking taste of a medium portion. In the case of devices dedicated for heating-type sticks that have been developed until now to express a smoking taste, a temperature program is designed to enable high-temperature heating in consideration of a heat transfer to the inside of the medium portion. The heating temperature is typically in a range of 200°C to 400°C. Unlike traditional cigarettes, which enable inhalation by burning cut leaves, a large amount of water vapor is released together when a stick of the medium portion is heated through a device.

The temperature level inside the medium portion through heating ranges from 100°C to 200°C. Since temperatures of airflows generated inside the medium portion are similar, a smoker may inhale hot air if there is no cooling material downstream of the medium portion.

Polymer materials (e.g., a polylactic acid (PLA), cellulose acetate (CA), poly(ethylene terephthalate) (PET), etc.) which are phase-changeable by absorbing heat within an airflow temperature range, as cooling materials of heating-type sticks that have been developed, are applied to the entire cross section of a filter in the form of a film, and the like, or a hollow tube portion is formed by giving properties of leading a stick into a device by using a paper straw (paper tube) and a tube filter formed of cellulose acetate, and the like, between a most downstream segment and the medium portion, so that airflow may be swirled, thereby providing a cooling effect.

The above polymer materials (e.g., PLA, CA, PET, etc.) are applicable by only a hot dip coating method, do not have flexibility when manufactured in the form of a sheet, and are easily broken due to brittleness, and accordingly it is impossible to directly apply the polymer materials and possible to apply the polymer materials to base paper by only coating.

### Disclosure of the Invention

### Technical Goals

To solve the above problems, the present disclosure provides a paper tube for smoking articles that may enhance a quality and taste of a smoking article by applying a flavored sheet with a cooling effect and a flavor expression effect.

The present disclosure provides a smoking article including a paper tube according to the present disclosure.

However, the technical goal obtainable from the present disclosure is not limited to the above-mentioned technical goal, and other unmentioned technical goals may be clearly understood from the following description by one of ordinary skill in the art to which the present disclosure pertains.

### Technical Solutions

According to an embodiment of the present disclosure, a paper tube for smoking articles includes a flavored sheet on an inner surface, an outer surface, or both of the paper tube. The flavored sheet may include a cellulose-based polymer, a plasticizer, and a flavoring material.

According to an embodiment of the present disclosure, the cellulose-based polymer may be in an amount of 20% by weight (wt%) to 60 wt% in the flavored sheet.

According to an embodiment of the present disclosure, the plasticizer may be in an amount of 1 wt% to 20 wt% in the flavored sheet.

According to an embodiment of the present disclosure, the flavoring material may be in an amount of 10 wt% to 50 wt% in the flavored sheet.

According to an embodiment of the present disclosure, the cellulose may include at least one selected from a group consisting of methyl cellulose, ethyl cellulose, carboxymethyl cellulose, carboxyethyl cellulose, hydroxymethyl cellulose, hydroxyethyl cellulose, hydroxypropyl cellulose, hydroxypropylmethyl cellulose, hydroxyethylmethyl cellulose, and agar.

According to an embodiment of the present disclosure, the plasticizer may include at least one selected from a group consisting of propylene glycol, polyethylene glycol, dipropylene glycol, diethylene glycol, triethylene glycol, tetraethylene glycol, glycerin, and sorbitol.

According to an embodiment of the present disclosure, the paper tube may have a resistance to draw of 0.1 mmH₂O to 1.5 mmH₂O per millimeter of a length.

According to an embodiment of the present disclosure, the flavored sheet may have a thickness of 1 mm or less.

According to an embodiment of the present disclosure, the flavored sheet may have a tensile strength of 1.0 kilogram-force (kgf)/15 mm or greater.

According to an embodiment of the present disclosure, the paper tube may have a circumference of 14 mm to 25 mm and a length of 5 mm or greater.

According to an embodiment of the present disclosure, the paper tube may include a first layer including the flavored sheet; and a second layer surrounding the first layer. A thickness ratio of the first layer to the second layer may be in a range of 2.5 : 1 to 0.5 : 1.

According to an embodiment of the present disclosure, the paper tube may include a first layer including the flavored sheet; a second layer surrounding the first layer; and a third layer including the flavored sheet. A thickness ratio of the first layer or the third layer to the second layer may be in a range of 2.5 : 1 to 0.5 : 1.

According to an embodiment of the present disclosure, a smoking article includes a filter portion including a paper tube according to the present disclosure.

According to an embodiment of the present disclosure, the smoking article may be a cigarette or an electronic cigarette, and may be in the form of a cigarette.

According to an embodiment of the present disclosure, the filter portion may include a first filter; a second filter including the paper tube; and a third filter including a tube structure.

According to an embodiment of the present disclosure, the first filter may include a fibrous form, a filament form, or both. The fibrous form and the filamentous form may each include at least one of a polymer, paper, cellulose acetate, activated carbon, and carbon.

### Effects

In the present disclosure, a flavored sheet may be introduced into a paper tube, to provide an airflow cooling effect and a flavor expression effect, and thus it is possible to enhance persistence of a smoking taste and a tobacco taste. For example, a flavored sheet may be disposed inside and/or outside the paper tube downstream of a medium portion of a heating-type tobacco stick, to enhance a cooling effect and the persistence of the smoking taste and the tobacco taste.

### Brief Description of Drawings

FIG. 1 illustrates an example of a configuration of a paper tube according to the present disclosure, according to an embodiment of the present disclosure.
FIG. 2 illustrates an example of a smoking article to which a paper tube according to the present disclosure is applied, according to an embodiment of the present disclosure.
FIG. 3 illustrates another example of a smoking article to which a paper tube according to the present disclosure is applied, according to an embodiment of the present disclosure.

### Best Mode for Carrying Out the Invention

Hereinafter, embodiments of the present disclosure will be described in detail with reference to the accompanying drawings. In the description of the present disclosure, detailed description of well-known related functions or configurations will be omitted when it is deemed that such description will cause ambiguous interpretation of the present disclosure. In addition, the terminologies used herein are for the purpose of appropriately describing example embodiments of the present disclosure, and may vary depending on the intention of users or operators or customs in the art to which the present disclosure belongs. Therefore, terms used herein should be defined based on contents of the entire present specification. The same reference numerals shown in each drawing refer to the same elements.

In the whole specification, when one member is positioned "on" another member, this not only includes a case that the one member is brought into contact with the other member, but also includes a case that another member exists between two members.

It will be understood that when a certain part "includes" a certain component, the part does not exclude another component but may further include another component.

Hereinafter, a paper tube for smoking articles, and a smoking article including the paper tube according to the present disclosure will be described in detail with reference to embodiments and drawings. However, the present disclosure is not limited to the embodiments and drawings.

In the present disclosure, a paper tube for smoking articles is provided. The paper tube may include a flavored sheet, and the flavored sheet may be disposed on an inner surface, an outer surface, or both of the paper tube.

According to an embodiment of the present disclosure, the flavored sheet may include a cellulose-based polymer, a plasticizer, and a flavoring material. The flavored sheet, which is a film-type sheet, may retain the flavoring material within the cellulose-based polymer to enhance persistence of a flavor and/or tobacco taste spread from a smoking article. In addition, the cellulose-based polymer may provide an airflow cooling effect due to a characteristic of a phase change (e.g., crystallization) only at a temperature (e.g., a high temperature) of an airflow traveling to a smoker in a smoking article, for example, in a stick. In addition, due to a high tensile strength and flexibility of the flavored sheet, the flavored sheet may be applied as a component of a paper tube or a paper tube filter instead of being applied to base paper.

According to an embodiment of the present disclosure, the "smoking article" may refer to any product that may be smoked or any product that may provide a smoking experience, regardless of whether the product is based on tobacco, tobacco derivatives, expanded tobacco, reconstituted tobacco, or tobacco substitutes. For example, the smoking article may refer to an article that may be smoked to generate an aerosol, such as a cigarette, a cigar, a cigarillo, an electronic cigarette (e.g., a heating-type cigarette), and the like. The smoking article may include an aerosol generating material, or an aerosol forming substrate. In addition, the smoking article may include a solid material based on raw tobacco materials, such as reconstituted tobacco sheets, cut tobacco leaves, reconstituted tobacco, and the like. Furthermore, a smoking material may include a volatile compound.

According to an embodiment of the present disclosure, the cellulose-based polymer may be a binder material while providing a polymer matrix for forming a sheet that is flexible, that has a high tensile strength and that is capable of retaining a flavoring material, and may include, for example, at least one selected from a group consisting of methyl cellulose, ethyl cellulose, carboxymethyl cellulose, carboxyethyl cellulose, hydroxymethyl cellulose, hydroxyethyl cellulose, hydroxypropyl cellulose, hydroxypropylmethyl cellulose, hydroxyethylmethyl cellulose, and agar, but is not limited thereto. Desirably, the cellulose-based polymer may be methyl cellulose and hydroxypropylmethyl cellulose.

According to an embodiment of the present disclosure, the cellulose-based polymer may be in an amount of 20 by weight (wt%) to 60 wt%; 20 wt% to 50 wt%; or 30 wt% to 40 wt% in the flavored sheet. If the amount of the cellulose-based polymer is less than 20 wt%, it may be difficult to obtain a tensile strength and flexibility that allow the cellulose-based polymer to be applied as base paper of a paper tube filter or a paper tube, or difficult to generate a sheet itself. If the amount of the cellulose-based polymer exceeds 60 wt%, it may be difficult to enhance persistence of a smoking taste and a tobacco taste because an aroma and flavor are not sufficiently expressed from a flavoring material in a sheet due to a change (e.g., breaking, and cracking) in physical properties of the sheet.

According to an embodiment of the present disclosure, as the flavoring material, all materials capable of imparting flavor and/or aroma characteristics or enhancing an aromatic taste of smoking and applicable to a smoking article may be used without limitation. The flavoring material may include, for example, at least one selected from a group consisting of an organic acid, such as a lactic acid, a citric acid, a malic acid, and the like, licorice, sucrose, fructose syrup, isosweet, cocoa, lavender, cinnamon, cardamom, celery, fenugreek, cascarilla, white sandalwood, bergamot, geranium, honey essence, rose oil, vanilla, lemon oil, orange oil, mint oil, cinnamon, caraway, cognac, jasmine, chamomile, menthol, cassia, ylang-ylang, salvia, spearmint, ginger, cilantro, a clove extract (or a clove material), and coffee, but is not limited thereto.

According to an embodiment of the present disclosure, the flavoring material may be in an amount of 10 wt% to 50 wt%; 10 wt% to 40 wt%; 10 wt% to 30 wt%; or 10 wt% to 20 wt% in the flavored sheet. If the amount of the flavoring material is within the above range, persistence of a flavor and/or tobacco taste that spread may be provided, the flavoring material may be applied at a high concentration, and an intensity of an aroma and/or flavor may be adjusted based on a concentration of the flavoring material to be added.

According to an embodiment of the present disclosure, the plasticizer may include at least one selected from a group consisting of propylene glycol, polyethylene glycol, dipropylene glycol, diethylene glycol, triethylene glycol, tetraethylene glycol, glycerin, and sorbitol, but is not limited thereto. Desirably, the plasticizer may be propylene glycol and glycerin.

According to an embodiment of the present disclosure, the plasticizer may be in an amount of 1 wt% to 20 wt%; 1 wt% to 15 wt%; 1 wt% to 10 wt%; or 5 wt% to 10 wt% in the flavored sheet to adjust a strength of the flavored sheet. If the amount of the plasticizer is less than 1 wt%, it may be difficult to have a tensile strength suitable to apply the plasticizer as a component of a paper tube filter of a smoking article, or difficult to have a flexibility due to an extremely low extension rate. In addition, if the amount of the plasticizer exceeds 20 wt%, a sheet may be easily torn due to poor physical properties of the sheet (e.g., a tensile strength may be reduced, or the sheet may be excessively softened), and it may be difficult to manufacture the sheet as a paper tube filter of a smoking article.

According to an embodiment of the present disclosure, the flavored sheet may have a thickness of 1 millimeter (mm) or less; 0.1 mm to 1 mm; 0.1 mm to 0.8 mm; or 0.2 mm to 0.5 mm. The flavored sheet may include a single layer or a plurality of layers. If the thickness of the flavored sheet exceeds 1 mm, it may be difficult to manufacture a sheet as a paper tube or a paper tube filter of a smoking article because a flexibility of the sheet is not properly implemented. Due to an increase in the thickness, a flavor and aroma may not be sufficiently expressed. If the flavored sheet is extremely thin, it may be difficult to obtain the cooling effect.

According to an embodiment of the present disclosure, the flavored sheet may have a tensile strength that allows the flavored sheet to be applied as a component of a paper tube or a paper tube filter of a smoking article. For example, the tensile strength of the flavored sheet may be 1.0 kilogram-force (kgf)/15 mm or greater; 2.0 kgf/15 mm or greater; 5.0 kgf/15 mm or greater; or in a range of 1.0 kgf/15 mm to 10 kgf/15 mm. If the tensile strength is within the above range, a flavored sheet with a properly balanced strength and flexibility to be applicable as base paper of a paper tube filter or a paper tube of a smoking article may be obtained.

According to an embodiment of the present disclosure, the paper tube may have a resistance to draw of 0.1 mmH₂O to 1.5 mmH₂O per millimeter of a length. If the resistance to draw is within the above range, smoke may smoothly flow during smoking, and persistence of a smoking taste and a tobacco taste may be enhanced.

According to an embodiment of the present disclosure, the paper tube may have a circumference of 14 mm to 25 mm; 14 mm to 20 mm; or 14 mm to 18 mm, and a length of 5 mm or greater; 10 mm or greater; a length of 10 mm to 20 mm, or 10 mm to 15 mm.

According to an embodiment of the present disclosure, the flavored sheet may be positioned on an inner surface, an outer surface, or both of the paper tube, and the paper tube may be used as a component of a smoking article, for example, as a filter portion (e.g., a paper tube filter). This will be described in more detail in association with the smoking article below.

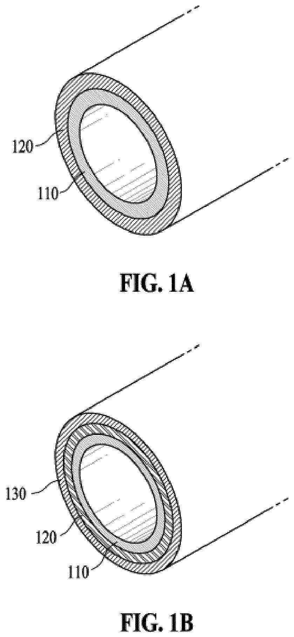

According to an embodiment of the present disclosure, referring to FIG. 1A, the paper tube may include a first layer 110 including the flavored sheet; and a second layer 120 formed of paper and surrounding the first layer. In other words, by attaching the flavored sheet to an inner wall surface of a paper tube formed of a cooling material and having a hollow tube, the cooling effect, and the persistence of the smoking taste and the tobacco taste may be enhanced. A thickness ratio of the first layer to the second layer may be in a range of 2.5 : 1 to 0.5 : 1. If the thickness ratio is included within the above thickness range, a high cooling efficiency may be obtained, and the persistence of the smoking taste and the tobacco taste may be enhanced. For example, the thickness ratio may be a ratio of a thickness (250 µm to 50 µm) of the first layer to a thickness (100 µm) of the second layer.

According to an embodiment of the present disclosure, referring to FIG. 1B, the paper tube may include a first layer 110 including the flavored sheet; a second layer 120 formed of paper and surrounding the first layer; and a third layer 130 including the flavored sheet. The flavored sheet of the first layer and the flavored sheet of the third layer may be the same, or different from each other in at least one of components, thicknesses, and physical properties. For example, a thickness ratio of the first layer or the third layer to the second layer may be in a range of 2.5 : 1 to 0.5 : 1. If the thickness ratio is included within the above thickness range, a high cooling efficiency may be obtained, and the persistence of the smoking taste and the tobacco taste may be enhanced.

The present disclosure relates to a smoking article including a paper tube according to the present disclosure.

According to an embodiment of the present disclosure, the smoking article may include a filter portion and a smoking material portion, and the filter portion may include a flavored sheet according to the present disclosure. For example, a paper tube to which the flavored sheet according to the present disclosure is applied may be introduced, to provide a cooling effect and a flavor expression effect.

According to an embodiment of the present disclosure, the filter portion may be a dual filter or a triple filter. In addition, the filter portion may include at least one of a porous matrix structure, a hollow tube filter, and a paper tube filter. In addition, the flavored sheet according to the present disclosure may be further attached to an inner wall surface of the tube filter. By attaching the flavored sheet to an inner surface of a hollow tube of a tube filter and a paper tube filter formed of a cooling material, an airflow may be swirled and thermal energy may be absorbed at the same time, so that the cooling effect may be more easily obtained.

According to an embodiment of the present disclosure, the dual filter may include a first filter and a second filter, and the second filter may include a paper tube (e.g., a paper tube filter) to which the flavored sheet according to the present disclosure is applied.

According to an embodiment of the present disclosure, the triple filter may include a first filter; a filter (e.g., a paper tube filter) including a paper tube to which the flavored sheet according to the present disclosure is applied; and a woven fabric filter or a tube filter. In a heating-type tobacco stick, the first filter may be disposed in a direction (e.g., a downstream direction) toward a smoker, and the second filter and the third filter may be sequentially arranged in a direction (e.g., an upstream direction) away from the smoker.

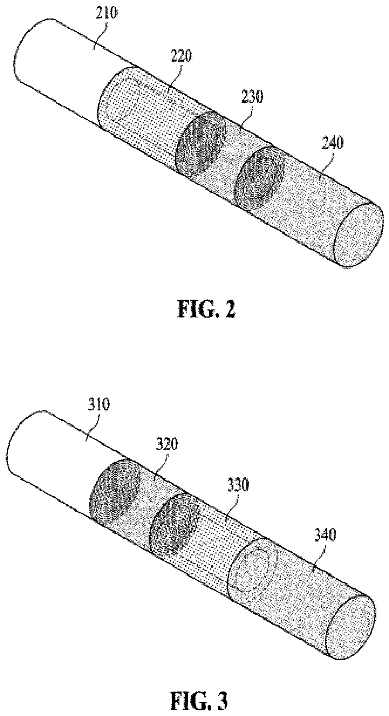

According to an embodiment of the present disclosure, referring to FIGS. 2 and 3, the smoking article may be a cigarette or an electronic cigarette, and may be in the form of a cigarette. Thus, by the flavored sheet, an airflow cooling effect may be obtained and an aroma and/or flavor may be expressed to enhance the persistence of the smoking taste and the tobacco taste. For example, by applying the flavored sheet to an inside of a paper tube having a cooling function, an airflow may be swirled and thermal energy may be absorbed at the same time, so that the cooling effect may be more easily obtained.

According to an embodiment of the present disclosure, referring to FIG. 2, a smoking article may be a triple filter and may include a first filter portion 210, a second filter portion 220 including a paper tube according to the present disclosure; and a third filter portion 230 including a woven fabric filter or a tube filter. The filter portion may express a flavor and/or aroma using the flavored sheet while cooling an airflow traveling from a smoking material portion 240 in an airflow direction.

According to an embodiment of the present disclosure, the first filter portion 210, the second filter portion 220, the third filter portion 230, and the smoking material portion 240 may each have a length selected from a range of 10 mm to 20 mm; or a range of 10 mm to 15 mm.

According to an embodiment of the present disclosure, referring to FIG. 3, a smoking article may be a triple filter and may include a first filter portion 310, a second filter portion 320 including a woven fabric filter or a tube filter; and a third filter portion 330 including a paper tube according to the present disclosure.

According to an embodiment of the present disclosure, the first filter portion 310, the second filter portion 320, the third filter portion 330, and a smoking material portion 340 may each have a length selected from a range of 10 mm to 20 mm; or a range of 10 mm to 15 mm.

According to an embodiment of the present disclosure, the second filter portion 220 and the third filter portion 330 may include a paper tube or a paper tube filter in which the flavored sheet according to the present disclosure is applied to an inner surface of a hollow tube, and the flavored sheet may include a cellulose-based polymer, a plasticizer, and a flavoring material. The flavored sheet, which is a film-type sheet, may retain the flavoring material within the cellulose-based polymer to enhance persistence of a flavor and/or tobacco taste spread from a smoking article.

According to an embodiment of the present disclosure, the cellulose-based polymer may be a binder material while providing a polymer matrix for forming a sheet that is flexible, that has a high tensile strength and that is capable of retaining a flavoring material, and may include, for example, at least one selected from a group consisting of methyl cellulose, ethyl cellulose, carboxymethyl cellulose, carboxyethyl cellulose, hydroxymethyl cellulose, hydroxyethyl cellulose, hydroxypropyl cellulose, hydroxypropylmethyl cellulose, hydroxyethylmethyl cellulose, and agar, but is not limited thereto. Desirably, the cellulose-based polymer may be methyl cellulose and hydroxypropylmethyl cellulose.

According to an embodiment of the present disclosure, the cellulose-based polymer may be in an amount of 20 wt% to 60 wt%; 20 wt% to 50 wt%; or 30 wt% to 40 wt% in the flavored sheet. If the amount of the cellulose-based polymer is less than 20 wt%, it may be difficult to obtain a tensile strength and flexibility that allow the cellulose-based polymer to be applied as base paper of a paper tube filter or a paper tube, or difficult to generate a sheet itself. If the amount of the cellulose-based polymer exceeds 60 wt%, it may be difficult to enhance persistence of a smoking taste and a tobacco taste because an aroma and flavor are not sufficiently expressed from a flavoring material in a sheet due to a change (e.g., breaking, and cracking) in physical properties of the sheet.

According to an embodiment of the present disclosure, as the flavoring material, all materials capable of imparting flavor and/or aroma characteristics or enhancing an aromatic taste of smoking and applicable to a smoking article may be used without limitation. The flavoring material may include, for example, at least one selected from a group consisting of an organic acid, such as a lactic acid, a citric acid, a malic acid, and the like, licorice, sucrose, fructose syrup, isosweet, cocoa, lavender, cinnamon, cardamom, celery, fenugreek, cascarilla, white sandalwood, bergamot, geranium, honey essence, rose oil, vanilla, lemon oil, orange oil, mint oil, cinnamon, caraway, cognac, jasmine, chamomile, menthol, cassia, ylang-ylang, salvia, spearmint, ginger, cilantro, a clove extract (or a clove material), and coffee, but is not limited thereto.

According to an embodiment of the present disclosure, the flavoring material may be in an amount of 10 wt% to 50 wt%; 10 wt% to 40 wt%; 10 wt% to 30 wt%; or 10 wt% to 20 wt% in the flavored sheet. If the amount of the flavoring material is within the above range, persistence of a flavor and/or tobacco taste that spread may be provided, the flavoring material may be applied at a high concentration, and an intensity of an aroma and/or flavor may be adjusted based on a concentration of the flavoring material to be added.

According to an embodiment of the present disclosure, the plasticizer may include at least one selected from a group consisting of propylene glycol, polyethylene glycol, dipropylene glycol, diethylene glycol, triethylene glycol, tetraethylene glycol, glycerin, and sorbitol, but is not limited thereto. Desirably, the plasticizer may be propylene glycol and glycerin.

According to an embodiment of the present disclosure, the plasticizer may be in an amount of 1 wt% to 20 wt%; 1 wt% to 15 wt%; 1 wt% to 10 wt%; or 5 wt% to 10 wt% in the flavored sheet to adjust a strength of the flavored sheet. If the amount of the plasticizer is less than 1 wt%, it may be difficult to have a tensile strength suitable to apply the plasticizer as a component of a paper tube or a paper tube filter of a smoking article, or difficult to have a flexibility due to an extremely low extension rate. If the amount of the plasticizer exceeds 20 wt%, a sheet may be easily torn due to poor physical properties of the sheet (e.g., a tensile strength may be reduced, or the sheet may be excessively softened), and it may be difficult to manufacture the sheet as a paper tube filter of a smoking article.

According to an embodiment of the present disclosure, the flavored sheet may have a thickness of 1 mm or less; 0.1 mm to 1 mm; 0.1 mm to 0.8 mm; or 0.2 mm to 0.5 mm. The flavored sheet may include a single layer or a plurality of layers. If the thickness of the flavored sheet exceeds 1 mm, it may be difficult to manufacture a sheet as a paper tube of a smoking article because a flexibility of the sheet is not properly implemented. Due to an increase in the thickness, a flavor and aroma may not be sufficiently expressed. If the flavored sheet is extremely thin, it may be difficult to obtain the cooling effect.

According to an embodiment of the present disclosure, the flavored sheet may have a tensile strength that allows the flavored sheet to be applied as a component of a paper tube or a paper tube filter of a smoking article. For example, the tensile strength of the flavored sheet may be 1.0 kgf/15 mm or greater; 2.0 kgf/15 mm or greater; 5.0 kgf/15 mm or greater; or in a range of 1.0 kgf/15 mm to 10 kgf/15 mm. If the tensile strength is within the above range, a flavored sheet with a properly balanced strength and flexibility to be applicable as base paper of a paper tube of a smoking article may be obtained.

According to an embodiment of the present disclosure, the paper tube may have a resistance to draw of 0.1 mmH₂O to 1.5 mmH₂O per millimeter of a length. If the resistance to draw is within the above range, smoke may smoothly flow during smoking, and persistence of a smoking taste and a tobacco taste may be enhanced.

According to an embodiment of the present disclosure, the paper tube of each of the second filter portion 220 and the third filter portion 330 may be configured as shown in FIG. 1.

According to an embodiment of the present disclosure, the woven fabric filter may include a polymer fiber, a fiber obtained by cutting the flavored sheet according to the present disclosure, or both. In addition, the flavored sheet according to the present disclosure may be further applied to an inner wall surface of the tube filter. For example, the polymer may be a polylactic acid (PLA), cellulose acetate (CA), poly(ethylene terephthalate) (PET), and the like.

According to an embodiment of the present disclosure, the first filter may include a filter tow known in the art to which the present disclosure belongs, and may include a filter tow including a fibrous form, a filamentous form, or both, but is not limited thereto. The fibrous form and the filamentous form may each include at least one of a polymer, paper, cellulose acetate, activated carbon, and carbon.

According to an embodiment of the present disclosure, the smoking material portion may include raw tobacco materials, such as cut tobacco leaves, and the like, a smoking taste and aerosol forming substrate, and the like, and may be formed according to the type of smoking articles.

According to an embodiment of the present disclosure, the smoking article may have a diameter of 4 mm to 10 mm and a circumference of 14 mm to 29 mm. In addition, the smoking article may have a length of 45 mm to 100 mm.

While the embodiments are described with reference to drawings, it will be apparent to one of ordinary skill in the art that various alterations and modifications in form and details may be made in these embodiments without departing from the spirit and scope of the claims and their equivalents. For example, suitable results may be achieved if the described techniques are performed in a different order, and/or if described components are combined in a different manner, and/or replaced or supplemented by other components or their equivalents. Therefore, other implementations, other embodiments, and equivalents to the claims are also within the scope of the following claims.

## Claims

1. A paper tube for smoking articles, the paper tube comprising:
a flavored sheet on an inner surface, an outer surface, or both of the paper tube,
wherein the flavored sheet comprises a cellulose-based polymer, a plasticizer, and a flavoring material.

2. The paper tube of claim 1, wherein the cellulose-based polymer is in an amount of 20% by weight (wt%) to 60 wt% in the flavored sheet.

3. The paper tube of claim 1, wherein the plasticizer is in an amount of 1 wt% to 20 wt% in the flavored sheet.

4. The paper tube of claim 1, wherein the flavoring material is in an amount of 10 wt% to 50 wt% in the flavored sheet.

5. The paper tube of claim 1, wherein the cellulose comprises at least one selected from a group consisting of methyl cellulose, ethyl cellulose, carboxymethyl cellulose, carboxyethyl cellulose, hydroxymethyl cellulose, hydroxyethyl cellulose, hydroxypropyl cellulose, hydroxypropylmethyl cellulose, hydroxyethylmethyl cellulose, and agar.

6. The paper tube of claim 1, wherein the plasticizer comprises at least one selected from a group consisting of propylene glycol, polyethylene glycol, dipropylene glycol, diethylene glycol, triethylene glycol, tetraethylene glycol, glycerin, and sorbitol.

7. The paper tube of claim 1, wherein the paper tube has a resistance to draw of 0.1 mmH₂O to 1.5 mmH₂O per millimeter of a length.

8. The paper tube of claim 1, wherein the flavored sheet has a thickness of 1 mm or less.

9. The paper tube of claim 1, wherein the flavored sheet has a tensile strength of 1.0 kilogram-force (kgf)/15 mm or greater.

10. The paper tube of claim 1, wherein the paper tube has a circumference of 14 mm to 25 mm and a length of 5 mm or greater.

11. The paper tube of claim 1, wherein
the paper tube comprises:
a first layer comprising the flavored sheet; and
a second layer surrounding the first layer, and
a thickness ratio of the first layer to the second layer is in a range of 2.5 : 1 to 0.5 : 1.

12. The paper tube of claim 1, wherein
the paper tube comprises:
a first layer comprising the flavored sheet;
a second layer surrounding the first layer; and
a third layer comprising the flavored sheet, and
a thickness ratio of the first layer or the third layer to the second layer is in a range of 2.5 : 1 to 0.5 : 1.

13. A smoking article comprising:
a filter portion comprising the paper tube of claim 1.

14. The smoking article of claim 13, wherein the smoking article is a cigarette or an electronic cigarette, and is in a form of a cigarette.

15. The smoking article of claim 13, wherein the filter portion comprises:
a first filter;
a second filter comprising the paper tube; and
a third filter comprising a tube structure.

16. The smoking article of claim 15, wherein the first filter comprises a fibrous form, a filamentous form, or both, wherein the fibrous form and the filamentous form each comprise at least one of a polymer, paper, cellulose acetate, activated carbon, and carbon.
